# EUROPEAN PATENT APPLICATION

(11) **EP 2 056 008 A2**
(43) Date of publication of application: **06.05.2009**
(21) Application number: 08168042.3
(22) Date of filing: 31.10.2008
(51) Int. Cl.: F16L 11/112

(54) **Metal-resin composite pipes**

(30) Priority: 01.11.2007 JP 2007285246; 31.03.2008 JP 2008093493
(71) Applicant: Kanaflex Corporation Inc., Osaka-shi, Osaka 530-6017 (JP)
(72) Inventor: Kanao, Shigeki, Hyogo 662-0002 (JP)
(74) Representative: Vossius & Partner

(57) **Abstract**

Provided is a metal-resin composite pipe provided with a spiral reinforcing strip plate formed of metal in a pipe wall, in which sufficient pressure capacity and rigidity can be maintained even if the pipe wall is made thin and in which flexibility can be improved. The metal-resin composite pipe1 includes the pipe wall 2 formed in a spiral corrugated shape and a reinforcing strip plate 4 formed of a metal sheet provided in a similar spiral on at least a mountain portion 31 and both side wall portions 32 continuous with the mountain portion 31 of a spiral synthetic resin wall portion 3 constituting the pipe wall 2, the reinforcing strip plate 4 being provided with a single or a plurality of concave portions 41 along a peak portion.

## Description

The present invention relates to a metal-resin composite pipe used mainly as a water-supply pipe, a sewage (drain) pipe, a protection pipe in which a power/communication cable such as an electric wire, or a telephone line is inserted for protection, and the like, and more specifically relates to a metal-resin composite pipe having excellent construction properties and economic efficiency due to light weight and flexibility and having high pressure capacity.

Conventionally, as the metal-resin composite pipe of this type, a synthetic resin pipe having flexibility in which a synthetic resin pipe wall is formed in a spiral corrugated shape has been widely used in order to enable easy handling when buried under the ground or the like. However, since it is necessary to withstand high earth pressure when buried under the ground, the pipe wall has to be made thick, whereby a large amount of a synthetic resin material is necessary for formation to increase the cost, and the conveyance and burial work is made difficult due to large weight.

Thus, those in which a spiral reinforcing strip plate formed of metal is buried in a thickness of a pipe wall are proposed so that the thickness of the pipe wall can be made thin (see Japanese Unexamined Utility Model Publication No. Sho 62-30080, Japanese Unexamined Utility Model Publication No. Hei 1-123420, and Japanese Unexamined Utility Model Publication No. Hei 1-123421). For example, Japanese Unexamined Utility Model Publication No. Sho 62-30080 proposes that having a structure in which a reinforcing strip plate formed of a metal sheet is arranged internally in a synthetic resin material wall portion forming an intermediate wall in an entire wall portion including a peak portion of the spiral corrugate shape forming the pipe wall, both side wall portions continuous with the peak portion, and a valley portion located on the pipe axis side of the both side wall portions, and in which the reinforcing strip plate is arranged to further overlap at least in a portion of the valley portion.

However, although the thickness of the pipe wall can be made thin with that in which the metal reinforcing plate is buried, the flexibility intrinsic to the spiral corrugated shaped pipe wall is lost by providing the metal strip plate internally, thereby causing a decrease in workability. The strength and rigidity in a mountain portion in particular, which tends to be directly subjected to external pressure and impact, becomes insufficient when a synthetic resin wall portion is made thin, thereby increasing the possibility of deformation and damage.

Thus, the present invention has an object of providing a metal-resin composite pipe provided with a spiral reinforcing strip plate formed of metal in a pipe wall, in which sufficient pressure capacity and rigidity can be maintained even when the pipe wall is made thin and in which the flexibility can be improved. This object is achieved with the features of the claims.

That is, the metal-resin composite pipe according to the invention includes a pipe wall formed in a spiral corrugated shape, and a reinforcing strip plate formed of a metal sheet and provided in a similar spiral on at least a mountain portion and both side wall portions continuous with the mountain portion of a spiral synthetic resin wall portion constituting the pipe wall, wherein the reinforcing strip plate includes a single or a plurality of concave portions provided along a peak portion thereof.

It is preferable that the reinforcing strip plate include a covering layer formed of synthetic resin and is provided on an inner surface side of at least the mountain portion and the both side wall portions continuous with the mountain portion of the synthetic resin wall portion such that an outer surface of the concave portion is in tight contact with the mountain portion of the synthetic resin wall portion.

It is preferable that a concavely recessed portion having a shape extending along the concave portion be formed in the mountain portion of the synthetic resin wall portion in a position corresponding to the concave portion. It is also preferable that the mountain portion of the synthetic resin wall portion be provided to externally cover the concave portion of the reinforcing strip plate in such a manner that a space is left.

It is preferable that a synthetic resin strip is attached in a similar spiral on an inner side surface of a part of the synthetic resin wall portion without the reinforcing strip plate but with at least a valley portion of the synthetic resin wall portion, the part of the synthetic resin wall portion being between side edges of adjacent reinforcing strip plates, the synthetic resin strip being attached in a state where both side edge portions thereof make contact with the both side edges of the adjacent reinforcing strip plates or overlap on the both side edges of the reinforcing strip plates.

It is preferable that an inner pipe wall is provided on an inner circumference side of the spiral pipe wall, and that the reinforcing strip plate be extended to the valley portion of the synthetic resin wall portion.

It is preferable that the reinforcing strip plate be formed by cutting a laminate steel plate into a strip shape. Further, it is preferable that a synthetic resin strip is attached in a similar spiral on an inner side surface of a part of the synthetic resin wall portion without the reinforcing strip plate but with at least a valley portion of the synthetic resin wall portion, the part of the synthetic resin wall portion being between side edges of adjacent reinforcing strip plates, the synthetic resin strip being attached in a state where both side edge portions thereof make contact with the both side edges of the adjacent reinforcing strip plates or overlap on the both side edges of the reinforcing strip plates.

It is preferable that a flat strip shaped metal strip plate having a covering layer formed of synthetic resin be bridged between mountain portions of the synthetic resin wall portion.

In the metal-resin composite pipe according to the present invention, since a single or a plurality of concave portions are provided along the peak portion of the reinforcing strip plate corresponding to the mountain portion of the pipe wall, not only the entire pressure capacity is improved but also the strength and rigidity of the mountain portion in particular, which tends to be subjected to external pressure and impact, can be considerably improved by the existence of the concave portion, whereby the thickness can be made thinner compared to the conventional metal-resin composite pipe, and the improvement in flexibility, reduction in weight, and reduction in cost can also be achieved.

Since the reinforcing strip plate includes the covering layer formed of synthetic resin and is provided on the inner surface side of at least the mountain portion and the both side wall portions continuous with the mountain portion of the synthetic resin wall portion such that the outer surface of the concave portion is in tight contact with the mountain portion of the synthetic resin wall portion, the reinforcing strip plate and the synthetic resin wall portion can be easily and firmly connected by thermal fusion of the resins to manufacture the metal-resin composite pipe having high durability efficiently and at low cost. Also, there is no risk of rust being formed due to accidental damage on the surface of the reinforcing strip plate at the time of construction, thereby enabling stable usage for a long period of time.

Further, since the concavely recessed portion having the shape extending along the concave portion is formed in the mountain portion of the synthetic resin wall portion in the position corresponding to the concave portion, the amount of resin in the mountain portion can be reduced to achieve weight reduction and cost reduction, and the strength can further be improved by the shape itself of the concavely recessed portion. Since the mountain portion of the synthetic resin wall portion is provided to externally cover the concave portion of the reinforcing strip plate in such a manner that a space is left, the recess is not formed in the outer surface of the mountain portion, whereby the pipe can be prevented from being stuck when arranged at the site or the like and from accompanying tear, the work efficiency can be improved, the amount of resin in the mountain portion can be reduced to achieve weight reduction and cost reduction, and the appearance of the mountain portion can be made simple without or with few recesses to achieve a more aesthetic design.

On the inner side surface of the part of the synthetic resin wall portion without the reinforcing strip plate but with at least the valley portion of the synthetic resin wall portion, which is between the side edges of the adjacent reinforcing strip plates, the synthetic resin strip is attached in a similar spiral in the state where the both side edge portions thereof make contact with the both side edges of the adjacent reinforcing strip plates or overlap on the both side edges of the reinforcing strip plates, whereby the pressure capacity of the entire pipe can be further improved, and peeling of the reinforcing strip plate, corrosion of the side edge portion of the reinforcing strip plate, damage due to the electric wire being stuck, and the like can be prevented in advance. In the case where the pipe is cut at the time of manufacture or construction, the reinforcing strip plate in the cut portion prevents the synthetic resin wall portion from being detached and a burr or the like is hardly formed in the cut portion, whereby the work of cutting at the time of manufacture or construction can be made easier to extremely improve the workability.

Since the inner pipe wall is provided on the inner circumference side of the spiral pipe wall, and the reinforcing strip plate is extended to the valley portion of the synthetic resin wall portion, the resistance when fluid flows can be eliminated to enable a suitable pipe for a water-supply pipe or a sewage pipe, and the pressure capacity can be improved.

Since the reinforcing strip plate is formed by cutting a laminate steel plate into the strip shape, the reinforcing strip plate can be manufactured efficiently. Since the flat strip shaped metal strip plate having the covering layer formed of synthetic resin is bridged between the mountain portions of synthetic resin wall portions, whereby the pressure capacity of the pipe can be improved with a simple structure.
Fig.1 is a front view showing a metal-resin composite pipe according to a first embodiment of the present invention.
Fig. 2A is a vertical sectional view and Fig. 2B is a partially enlarged view of Fig. 2A as illustrative views showing the metal-resin composite pipe.
Fig. 3A is a sectional view and Fig. 3B is a sectional view showing another manufacturing method as illustrative views showing manufacturing methods of the metal-resin composite pipe according to the first embodiment of the present invention.
Fig. 4A is a vertical sectional view and Fig. 4B is a partially enlarged view of Fig. 4A as illustrative views showing a modified example of the metal-resin composite pipe.
Figs. 5A and 5B are sectional portion enlarged views showing modified examples respectively and Fig. 5C is a sectional portion enlarged view showing another modified example as illustrative views showing other modified examples of the metal-resin composite pipe.
Fig. 6 is a front view showing a metal-resin composite pipe according to a second embodiment of the present invention.
Fig. 7A is a vertical sectional view, and Fig. 7B is a partially enlarged view of Fig. 7A as illustrative views showing the metal-resin composite pipe.
Fig. 8 is a sectional portion enlarged view showing a modified example of the metal-resin composite pipe.
Fig. 9 is a front view showing another modified example of the metal-resin composite pipe.
Fig. 10A is a vertical sectional view and Fig. 10B is a partially enlarged view of Fig. 10A as illustrative views showing another modified example of the metal-resin composite pipe.
Fig. 11 is a sectional portion enlarged view further showing another modified example of the metal-resin composite pipe.
Fig. 12A is vertical sectional view and Fig. 12B is a partially enlarged view of Fig. 12A as illustrative views further showing another modified example of the metal-resin composite pipe.
Fig. 13 is a sectional portion enlarged view further showing another modified example of the metal-resin composite pipe.
Fig. 14 is a sectional portion enlarged view further showing another modified example of the metal-resin composite pipe.

### DESCRIPTION OF THE NUMERALS

- 1 ...: Metal-resin composite pipe
- 2 ...: Pipe wall
- 3 ...: Synthetic resin wall portion
- 4 ...: Reinforcing strip plate
- 5 ...: Synthetic resin strip
- 6 ...: Metal strip plate
- 7 ...: Inner pipe
- 8 ...: Inner side reinforcing plate
- 30 ...: Synthetic resin wall portion molding body
- 31 ...: Mountain portion
- 32 ...: Side wall portion
- 33 ...: Valley portion
- 34 ...: Concavely recessed portion
- 40 ...: Metal sheet
- 41 ...: Concave portion
- 42 ...: Covering layer
- 60 ...: Metal reticular strip
- 61 ...: Covering layer
- s: ... Space

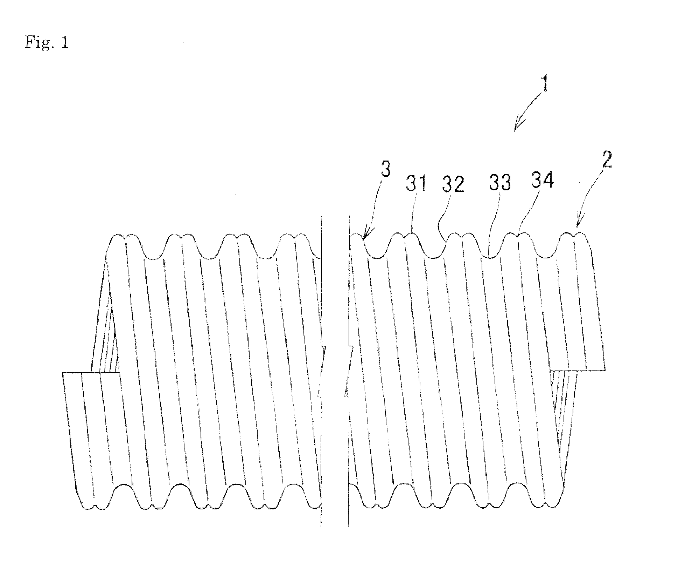

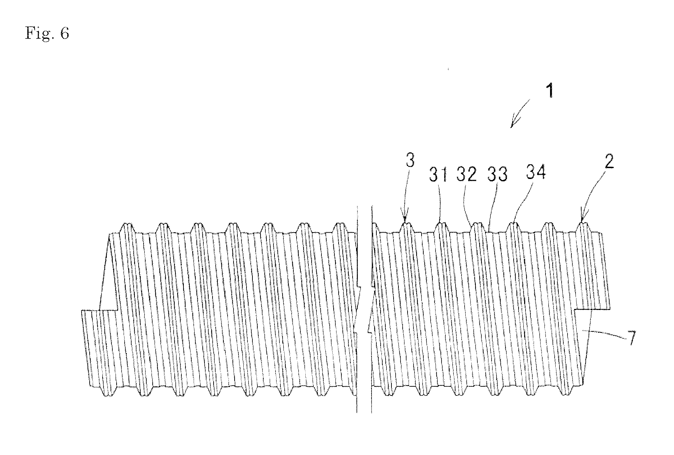

Next, the structure of a metal-resin composite pipe according to embodiments of the present invention will be described in detail based on Figs. 1 to 11. Figs. 1 to 5 show a first embodiment, and Figs. 6 to 11 show a second embodiment. In the drawings, reference numeral 1 denotes a metal-resin composite pipe, 2 denotes pipe wall, 3 denotes a synthetic resin wall portion, 4 denotes a reinforcing strip plate, and 5 denotes a synthetic resin strip, respectively.

Note that, in the descriptions of the respective embodiments described below, it is described as an example that the pipe wall 2 forms a pipe basically in which an approximately arc shaped or trapezoid shaped mountain portion 31 and valley portion 33 form a continuous wave with a side wall portion 32 therebetween and includes a concavely recessed portion 34 in the mountain portion 31. However, the present invention is not in any way limited to such a structure, and it is needless to say that the pipe basically may be formed in a spiral corrugated shape in which the mountain portion and the valley portion having an approximate V-shape, an approximate rectangular U-shape, a polygon shape, or the like in part are continuous, for example. The side wall portion 32 refers to an approximately linear connection portion moderately connecting the mountain portion 31 and the valley portion 33.

First, the first embodiment will be described based on Figs. 1 to 5.

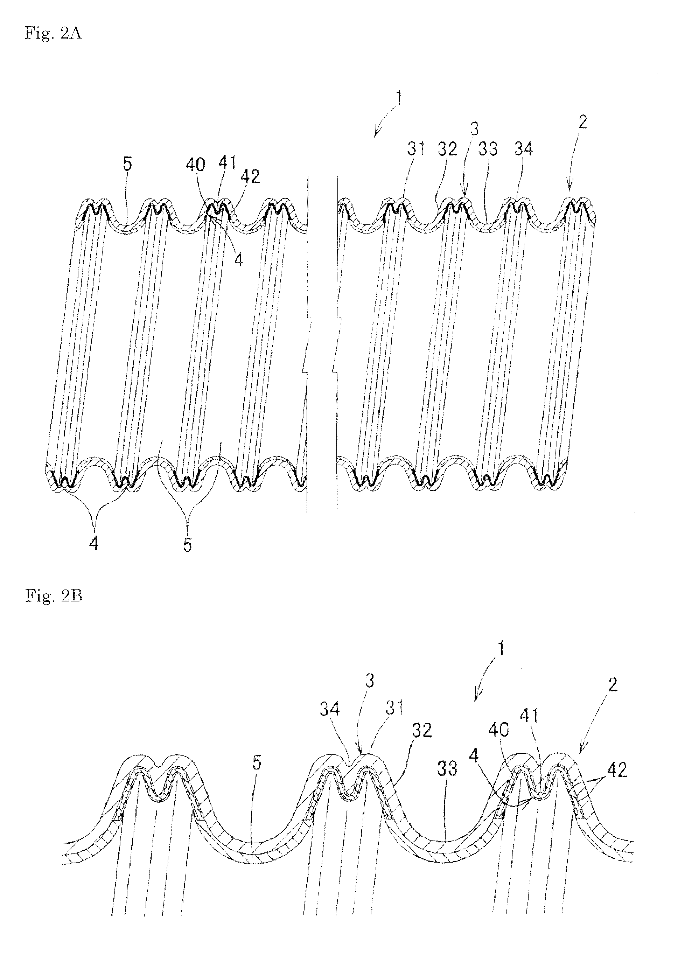

In the metal-resin composite pipe 1 of the present invention, as shown in Figs. 1 and 2, the pipe wall 2 is formed in a spiral corrugated shape, the reinforcing strip plate 4 formed of a metal sheet is provided in a spiral in the same manner in the mountain portion 31 and both side wall portions 32 continuous with the mountain portion 31 of the spiral synthetic resin wall portion 3 constituting the pipe wall 2, and the concave portion 41 is provided along a peak portion of the reinforcing strip plate 4 corresponding to the mountain portion 31.

The synthetic resin wall portion 3 is formed of a synthetic resin of polyolefin such as polyethylene and propylene, vinyl chloride, or the like, but other synthetic rubber or soft resins may also be used. In a portion of the synthetic resin wall portion 3 particularly in which the reinforcing strip plate is not arranged, a fiber material such as a thread, fabric, nonwoven fabric, and glass fiber, or a reinforcing material such as a metal net may be buried as necessary for reinforcement.

The thickness of the synthetic resin wall portion 3 is made to be approximately constant thickness, and the mountain portion 31 is provided with a concavely recessed portion 34 in the same manner along the shape of the concave portion 41 of the reinforcing strip plate 4. By providing the concavely recessed portion 34, the pressure (such as earth pressure) on the mountain portion 31 can be dispersed synergistically with the effect due to the concave portion 41 of the reinforcing strip plate 4, whereby not only the strength and rigidity of the mountain portion 31 is improved but also the pressure capacity of the metal-resin composite pipe 1 can be improved.

The reinforcing strip plate 4 is provided with a covering layer 42 formed of synthetic resin on the front and back of a metal sheet 40, and is provided in a spiral shape and in a tight-contact state on the inner side surface of the mountain portion 31 and the both side wall portions 32 continuous with the mountain portion 31 of the synthetic resin wall portion 3, as shown in Fig. 2. The covering layer 42 of the reinforcing strip plate 4 and the synthetic resin wall portion 3 are welded to each other to be integrated firmly. The material of the covering layer 42 is preferably the same material as the synthetic resin wall portion 3 in terms of coherency, but is not limited in any way, and is preferably formed of polyolefin resin such as polyethylene resin and polypropylene resin, for example.

The metal sheet 40 of the reinforcing strip plate 4 may be a punched plate having a number of small holes punched in the plate surface or a metal plate without the small holes, for example. As the material of the metal sheet 40, a stainless sheet, a steel sheet, or an iron plate may be used, or other metal sheets may be used.

The concave portion 41 of the reinforcing strip plate 4 is subjected to a deformation process so that the peak portion is bent in an approximate M-shape in part and has a recessed shape approximately in an arc shape in this embodiment, but is not limited thereto, and may be a recessed rectangular U-shape or V-shape, for example.

When the metal-resin composite pipe 1 of this embodiment is used as an underground pipe, the pipe is arranged along a groove dug in a planned pipe arrangement site to a predetermined depth, and the dug soil is covered thereon. In the arranged pipe, the reinforcing strip plate 4 including the concave portion 41 exhibits excellent pressure resistance against earth pressure.

When an electric wire or the like is inserted into the pipe, the electric wire or the like is movably supported only on the inner circumference surface of the valley portion in the same manner as in the related art, whereby it is advantageous in that a friction area of the inner circumference surface and the electric wire or the like is small, whereby the insertion work of the electric wire or the like can be performed easily. Since dew water is collected within the mountain portion on the lower side of the pipe even if dew is formed within the pipe, the electric wire or the like (electric wire cover or the like) is not directly immersed, thereby enabling good protection for a long period of time in the same manner as in the related art.

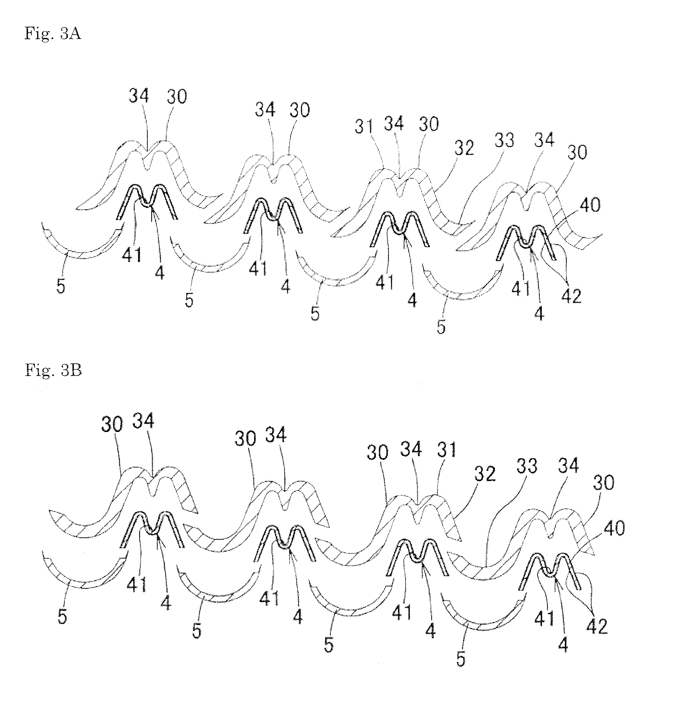

In this embodiment, as shown in Fig. 3A, the shape is formed by separately supplying the reinforcing strip plate 4 having the concave portion 41 continuously in a spiral with respect to a synthetic resin wall portion molding body 30 having the concavely recessed portion 34 in a half-cured state immediately after extrusion formation, polymerizing both side edge portions of the molding body 30 to be sequentially wound in a spiral while attaching the inner circumference surface of the concavely recessed portion 34 curved in an M-shape with the reinforcing strip plate 4 having the outer circumference surface curved in an M-shape in the same manner to weld and integrate the mountain portion 31 and the side wall portion 32 continuous therewith of the synthetic resin wall portion molding body 30 with the covering layer 42 of the reinforcing strip plate 4, and simultaneously supplying the synthetic resin strip 5 continuously from the inner side to be attached and wound on the inner side surface including the valley portion 33 between the reinforcing strip plates 4. Note that the reinforcing strip plate 4 and the synthetic resin wall portion molding body 30 or the synthetic resin strip 5 and the synthetic resin wall portion molding body 30 may be attached with each other by thermal fusion using a heating device. It is also possible to integrally extrude and form the reinforcing strip plate 4, the synthetic resin wall portion molding body 30, and the synthetic resin strip 5 in a spiral, and the reinforcing strip plate 4 and the synthetic resin strip 5 may be adhered to predetermined portions of the pipe wall 2 using an adhesive or the like. When supplying the synthetic resin strip 5 in a spiral, as shown in Fig. 3A, the shape is formed preferably by attaching both side edge portions thereof to overlap on both side edges of the adjacent reinforcing strip plates 4. As shown in Fig. 3B, the shape may be formed by the same method described above with all of the valley portion being provided on one side of the synthetic resin wall portion molding body 30.

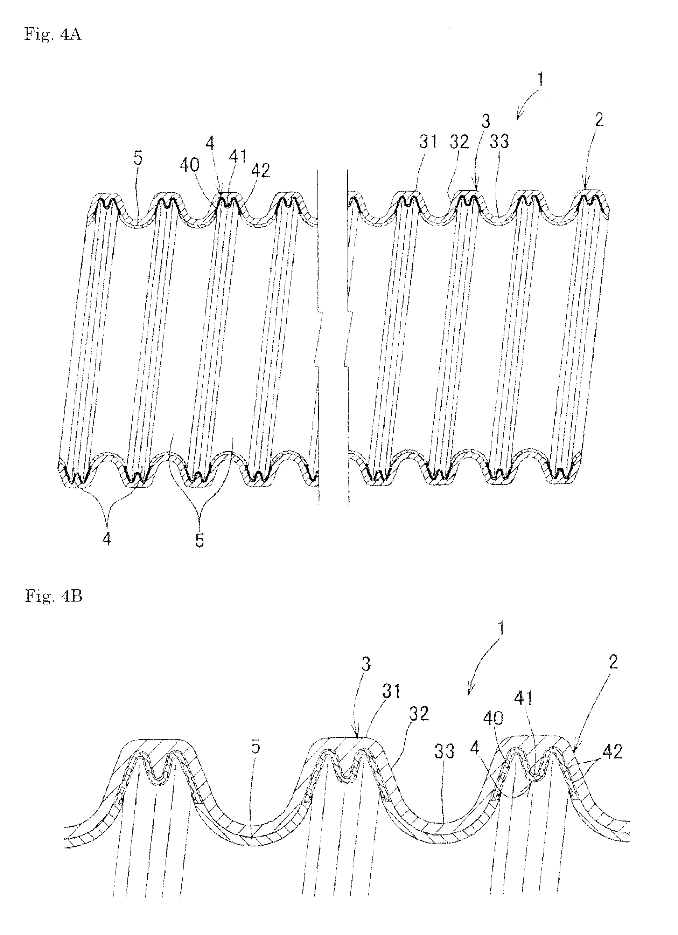

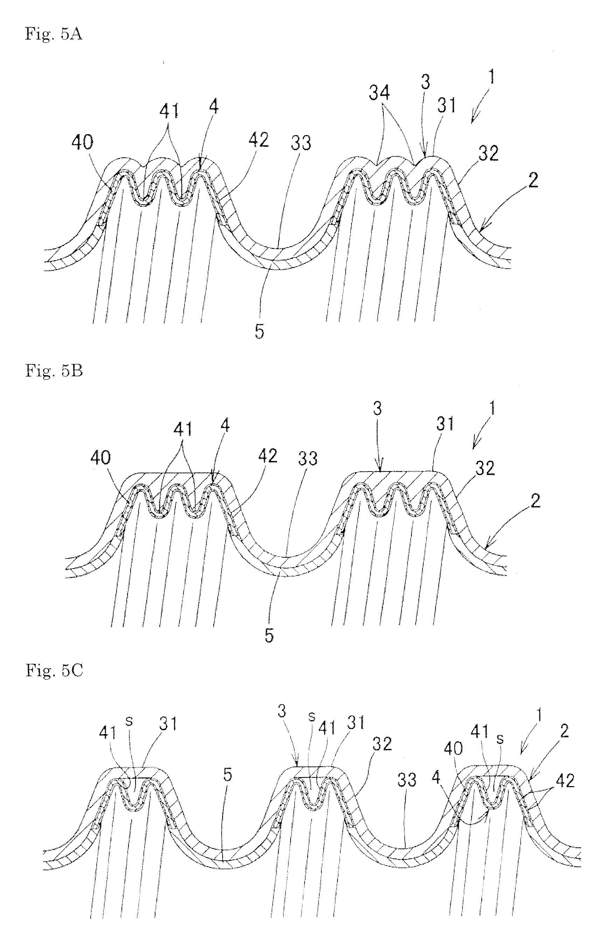

Note that, although the shape of the mountain portion 31 of the synthetic resin wall portion 3 is formed in an approximate M-shape in the same manner as the reinforcing strip plate 4 in this example, the outer circumference portion of the mountain portion 31 of the synthetic resin wall portion 3 corresponding to the concave portion 41 may be formed to be approximately flat, as shown in Figs. 4A and 4B. Alternatively, it may be configured to further swell and curve outward. Accordingly, the recess is not formed in the outer surface of the mountain portion, whereby the pipe can be prevented from being stuck when arranged at the site or the like and from accompanying tear, and the work efficiency can be improved. As shown in Figs. 5A, 5B and 5C, two or more of the concave portions 41 of the reinforcing strip plate 4 may be aligned, whereby the pressure capacity can be improved. The synthetic resin wall portion 3 may have the outer circumference surface formed in a corrugated shape along the reinforcing strip plate 4 as shown in Fig. 5A, or may have the outer circumference surface of the mountain portion 31 formed to be approximately flat as shown in Fig. 5B. As shown in 5C, providing the mountain portion 31 of the synthetic resin wall portion 3 to externally cover the concave portion 41 of the reinforcing strip plate 4 in such a manner that a space s is left is also a preferable embodiment. Accordingly, the recess is not formed in the outer surface of the mountain portion, whereby the pipe can be prevented from being stuck when arranged at the site or the like and from accompanying tear, the work efficiency can be improved, and the manufacture becomes easy to achieve cost reduction. In this case, the synthetic resin wall portion 3 is preferably formed of polyolefin resin such as polyethylene resin and polypropylene resin, for example.

Next, a second embodiment will be described based on Figs. 6 to 11.

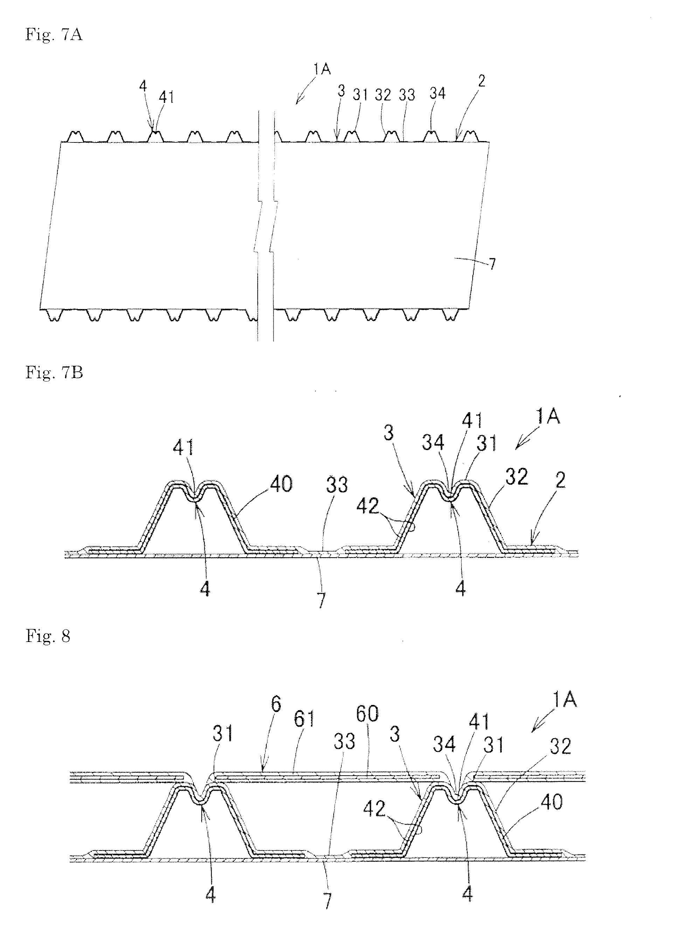

Fig. 6 is a front view of a metal-resin composite pipe 1A according to the second embodiment, and Fig. 7A is a vertical sectional view and Fig. 7B is a partially enlarged view thereof. In this embodiment, as shown in Figs. 6, 7A, and 7B, the cover strip 4 is extended to the valley portion of the synthetic resin wall portion 3, and a straight inner pipe 7 formed of synthetic resin is provided further on the inner side thereof. The inner pipe 7 allows the fluid to easily flow to make it suitable as a water-supply pipe, a sewage pipe, and the like, for example. The inner pipe 7 is preferably constituted of the same material as the synthetic resin wall portion 3 in terms of coherency, but is not limited in any way. For example, it is preferably formed of polyolefin resin such as polyethylene resin and polypropylene resin, for example.

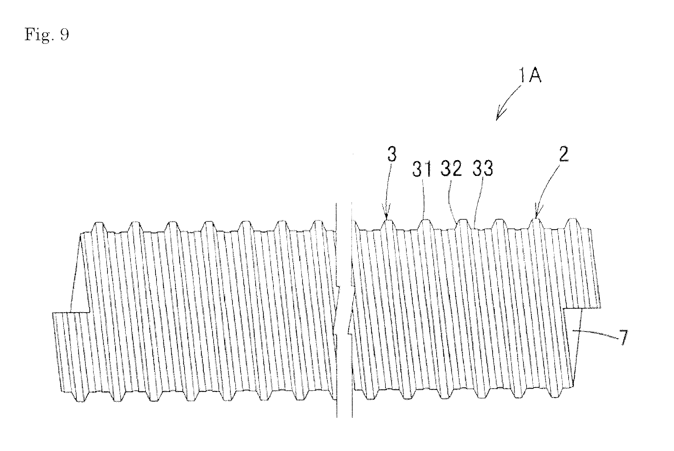

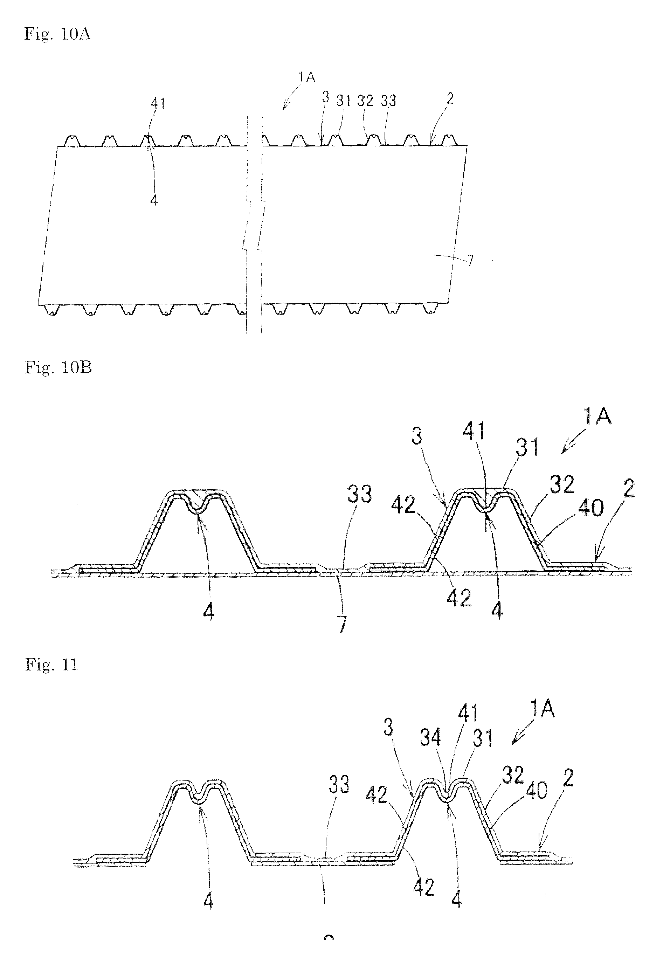

Note that, as shown in Fig. 8, a flat strip shaped metal strip plate 6 in which a metal plate or metal reticular strip 60 is provided with a covering layer 61 formed of synthetic resin may be bridged between the adjacent mountain portions 31 of the synthetic resin wall portions 3. Accordingly, the strength of the pipe itself can be improved easily and at low cost. As shown in Figs. 9, 10A, and 10B, in the same manner as the first embodiment described above, the outer circumference surface of the mountain portion 31 of the synthetic resin wall portion 3 may be formed to be flat so that the recess is not formed in the outer surface of the mountain portion, whereby the pipe can be prevented from being stuck when arranged at the site or the like and from accompanying tear, and the work efficiency can be improved.

Further, although the inner pipe 7 is formed in a straight shape (approximately straight cylinder shape) in this example, the inner wall does not need to be straight, and may have some corrugated concave and convex shape, for example. Instead of providing the straight inner pipe 7, a flat strip shaped inner side reinforcing plate 8 formed of synthetic resin may be provided only on the inner side of the valley portion 33 in a spiral as shown in Fig. 11. Accordingly, flexibility can be provided while keeping the pressure capacity at a high level, and the usage amount of raw material such as synthetic resin can be reduced to reduce the weight, whereby it becomes more advantageous in terms of manufacture, conveyance, construction properties, and the like.

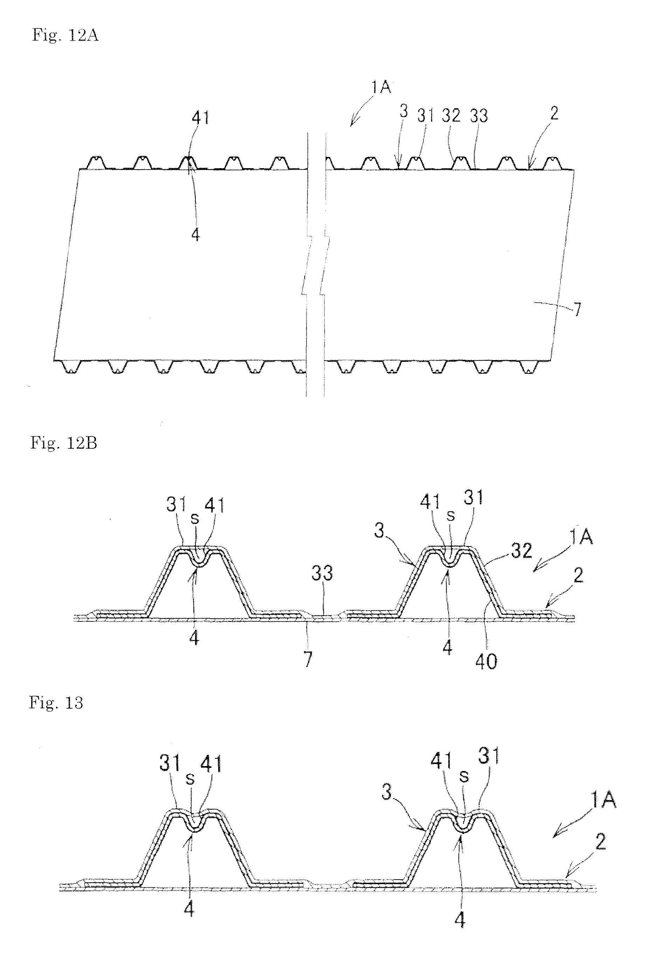

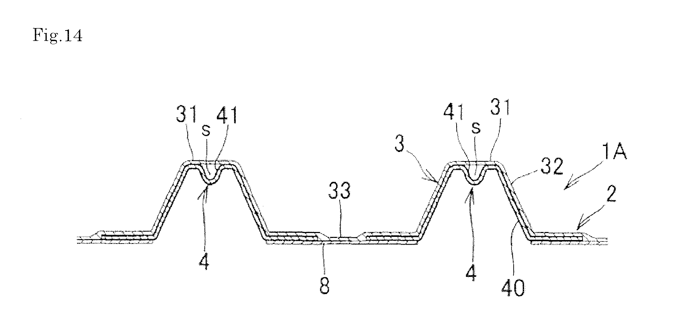

Figs. 12A and 12B show an embodiment in which the mountain portion 31 of the synthetic resin wall portion 3 is provided to externally cover the concave portion 41 of the reinforcing strip plate 4 in such a manner that a space s is left, in the same manner as that shown in Fig. 5C of the first embodiment. Accordingly, the recess is not formed in the outer surface of the mountain portion, whereby the pipe can be prevented from being stuck when arranged at the site or the like and from accompanying tear, the work efficiency can be improved, and the manufacture becomes easy to achieve cost reduction. The synthetic resin wall portion 3 is preferably formed of polyolefin resin such as polyethylene resin and polypropylene resin, for example. Note that the mountain portion 31 may be bridged in a straight shape to cover the concave portion 41 as shown in Fig. 12B, but may also be slightly recessed to increase the contact area with the concave portion 41 as shown in Fig. 13 so that the space s is decreased to improve the strength. Regarding the improvement of strength, the same can be said for the case of Fig. 5C. With the mountain portion 31 being provided to externally cover the concave portion 41 while maintaining the space s in this manner, it may be configured such that the flat strip shaped inner side reinforcing plate 8 formed of synthetic resin is provided in a spiral only on the inner side of the valley portion 33 instead of the straight inner pipe 7 as shown in Fig. 14.

Other configurations are the same as those of the first embodiment described above. The same structures are denoted by the same reference numerals, and descriptions thereof are omitted.

## Claims

1. A metal-resin composite pipe comprising:
a pipe wall formed in a spiral corrugated shape; and
a reinforcing strip plate formed of a metal sheet and provided in a similar spiral on at least a mountain portion and both side wall portions continuous with the mountain portion of a spiral synthetic resin wall portion constituting the pipe wall,
wherein the reinforcing strip plate includes a single or a plurality of concave portions provided along a peak portion thereof.

2. The metal-resin composite pipe according to claim 1, wherein the reinforcing strip plate includes a covering layer formed of synthetic resin and is provided on an inner surface side of at least the mountain portion and the both side wall portions continuous with the mountain portion of the synthetic resin wall portion such that an outer surface of the concave portion is in tight contact with the mountain portion of the synthetic resin wall portion.

3. The metal-resin composite pipe according to claim 1 or 2, wherein a concavely recessed portion having a shape extending along the concave portion is formed in the mountain portion of the synthetic resin wall portion in a position corresponding to the concave portion.

4. The metal-resin composite pipe according to claim 1 or 2, wherein the mountain portion of the synthetic resin wall portion is provided to externally cover the concave portion of the reinforcing strip plate in such a manner that a space is left.

5. The metal-resin composite pipe according to any one of claims 2 to 4, wherein a synthetic resin strip is attached in a similar spiral on an inner side surface of a part of the synthetic resin wall portion without the reinforcing strip plate but with at least a valley portion of the synthetic resin wall portion, the part of the synthetic resin wall portion being between side edges of adjacent reinforcing strip plates, the synthetic resin strip being attached in a state where both side edge portions thereof make contact with the both side edges of the adjacent reinforcing strip plates or overlap on the both side edges of the reinforcing strip plates.

6. The metal-resin composite pipe according to any one of claims 1 to 5, wherein an inner pipe wall is provided on an inner circumference side of the spiral pipe wall, and the reinforcing strip plate is extended to the valley portion of the synthetic resin wall portion.

7. The metal-resin composite pipe according to any one of claims 1 to 6, wherein the reinforcing strip plate is formed by cutting a laminate steel plate into a strip shape.

8. A metal-resin composite pipe according to any one of claims 1 to 7,
wherein a flat strip shaped metal strip plate having a covering layer formed of synthetic resin is bridged between mountain portions of synthetic resin wall portions.
